## Europäisches Patentamt

## European Patent Office

## Office européen des brevets

(11) Numéro de publication: **0 328 185**
**A2**

## DEMANDE DE BREVET EUROPEEN

(21) Numéro de dépôt: 89200206.4

(22) Date de dépôt: 31.01.89

(51) Int. Cl.⁴: **B29C 37/00** , **B29C 67/22**

(30) Priorité: 10.02.88 IT 6709688

(43) Date de publication de la demande:
16.08.89 Bulletin 89/33

(84) Etats contractants désignés:
BE DE ES FR GB SE

(71) Demandeur: GESTIONI RIUNITE TOSCANA
GOMMA S.p.A.
Via Palestro 115
I-27038 Robbio(Pavia)(IT)

(72) Inventeur: Gilardi, Pier Enrico, Dr.Ing.
Via Amedeo d'Aosta 18
I-27038 Robbio (Pavia)(IT)

(74) Mandataire: Patrito, Pier Franco, Dr. Ing.
Cabinet PATRITO BREVETTI Via Don Minzoni
14
I-10121 Torino(IT)

(54) Procédé et appareillage pour marquer des articles en matière expansée produits de manière irrégulière.

(57) Un procédé et un appareillage pour marquer automatiquement un article en matière expansée lorsqu'une irrégularité a été constatée au course de son procédé de production, dans lesquels, en conséquence de la constatation d'une irrégularité dans au moins l'un des paramètres opératifs après l'introduction du mélange réactif (M2) dans la cavité interne de la coquille inférieure (5) du moule (5-7), et pendant que celui-ci est encore ouvert, à une partie de la cavité interne de la coquille supérieure (7) du moule est appliquée une trace formée par un colorant (C) résistant aux conditions de traitement, physiquement et chimiquement compatible avec l'article formé et capable d'adhérer à celui-ci lorque, dans son expansion, il entre en contact avec la partie marquée de la cavité interne de la coquille supérieure (7) du moule. L'application de la marque peut se faire automatiquement par l'action d'un appareillage comprenant un éjecteur (19) disposé pour projeter vers la cavité interne de la coquille supérieure (7) ouverte du moule le colorant (C) destiné à former la marque.

# PROCEDE ET APPAREILLAGE POUR MARQUER DES ARTICLES EN MATIERE EXPANSEE PRODUITS DE MANIERE IRREGULIERE

La présente invention a pour object un procédé et un appareillage pour marquer un article en matière expansée lors qu'une irrégularité s'est vérifiée lors de son procédé de production.

En général, les articles en matière expansée sont produits à l'aide de moules constitués par deux coquilles présentant des cavités internes qui, lorsque les deux coquilles du moule sont superposées, définissent la forme dans laquelle l'article doit être produit. Lorsque le moule est ouvert, une quantité déterminée de mélange réactif est introduite dans la cavité interne de la coquille inférieure du moule, à laquelle aussitôt on superpose la coquille supérieure du moule. Le mélange réactif produit rapidement une réaction d'écumage et de réticulation, il augmente de volume jusqu'à occuper complètement la cavité interne des deux coquilles du moule, puis il se consolide et il prend une consistance dépendant de la composition et de la quantité du mélange réactif introduit dans le moule. Après un temps suffisant, le moule peut être ouvert à nouveau et l'article produit peut être sorti du moule. Toutes ces opérations sont effectuées par des appareillages automatiques suivant l'ordre et les temps requis. Une fois mélangés, les composants du mélange réactif réagissent très rapidement, et pour cette raison le mélange doit être préparé au moment même de son introduction dans le moule, par un dosage approprié des composants qui arrivent séparément à une tête doseuse. Afin que l'article produit présente les caractéristiques désirées, il est nécessaire que les proportions des composants arrivés à la tête doseuse et la quantité de mélange débitée correspondent, dans certaines marges de tolérance, à des valeurs préétablis. Grâce à des appareillages de contrôle, ces paramètres opératifs peuvent être automatiquement relevés, élaborés et comparés aux valeurs limites imposés, et les appareillages de contrôle peuvent émettre une signalisation d'avertissement chaque fois que, pour une raison quelconque, on vérifie une discordance entre les paramètres relevés et les champs admis pour les paramètres imposés. Lorsque cette signalisation d'avertissement est émise, un opérateur doit marquer le moule à l'égard duquel des paramètres de travail irréguliers ont été relevés, et lors qu'ensuite l'article produit est tiré de ce moule marqué il doit être éliminé ou bien dirigé, séparément des articles produits correctement, vers des contrôles particuliers afin de vérifier si ses caractéristiques sont également acceptables ou bien s'il doit être éliminé. Cependant, la nécessité d'une intervention des opérateurs pour marquer un moule lorsqu'une irrégularité opérative a été constatée et pour diriger vers une destination différente l'article juste tiré d'un moule marqué gêne l'automatisme de la production et exige la présence de personnel qui autrement ne serait pas nécessaire, en introduisant de plus des possibilités d'erreurs humaines.

Pour conserver l'automatisme de la production, au contraire, il serait souhaitable de pouvoir marquer non pas le moule dans lequelle se forme l'article irrégulièrement produit, mais l'article lui-même, de sorte que celui-ci pourrait ensuite être séparé des articles régulièrement produits pendant n'importe quelle phase du traitement ultérieur des articles. Cependant, jusqu'à présent cela n'a pas été possible car, pendant la courte période entre le moment où l'irrégularité est constatée et le moment immédiatement suivant où le moule est fermé, l'article n'est pas encore formé et il ne peut donc recevoir aucun genre de marques.

Le but de la présente invention est de réaliser un procédé et un appareillage qui, malgré la difficulté exposée ci-dessus, permettent de marquer l'article produit lui-même, chaque fois qu'une irrégularité a été constatée dans les paramètres opératifs, de sorte que cet article puisse être reconnu dans n'importe quelle phase ultérieure de son traitement, afin de le soumettre à des contrôles particuliers ou bien de l'éliminer.

Dans le procédé suivant l'invention, comme conséquence de la constatation d'une irrégularité dans au moins l'un des paramètres opératifs après l'introduction du mélange réactif dans la cavité interne de la coquille inferiéure du moule, et pendant que celui-ci est encore ouvert, à une partie de la cavité interne de la coquille supérieure du moule est appliquée une trace formée par un colorant résistant aux conditions de traitement, physiquement et chimiquement compatible avec l'article formé et susceptible d'adhérer à ce dernier lorsque celui-ci, dans son expansion, entre en contact avec la partie marquée de la cavité interne de la coquille supérieure du moule.

De cette manière, la trace appliquée sur la cavité interne de la coquille supérieure du moule se transfère sur l'article en formation, et elle reste adhérente à celui-ci après qu'il a été démoulé, de sorte que l'article produit irrégulièrement, et qui prévoyablement peut être défectueux, demeure constamment reconnaissable au cours de toute phase successive de son traitement et peut être contrôlé ou éliminé au moment considéré le plus approprié.

Dans le procédé suivant l'invention on utilise de préférence un colorant qui se transfère totalement de la cavité interne de la coquille supérieure du moule à l'article formé. Dans ce cas on évite toute nécessité de nettoyage du moule qui a reçu le colorant dans sa cavité interne. Un tel colorant peut être constitué avantageusement par une encre à séchage rapide, résistante à l'eau, qu'on peut trouver dans le commerce commun, éventuellement mélangée à un solvant.

La trace caractéristique du procédé suivant l'invention peut, bien entendu, être appliquée par un opérateur lorsque les appareillages de contrôle signalent une irrégularité dans les paramètres opératifs, en obtenant même de cette façon un avantage par rapport au mode habituel de procéder, soit parce que l'opérateur doit uniquement appliquer la trace de marquage et non pas modifier la direction des articles irrégulièrement produits lorsqu'ils sont démoulés, soit parce que la différentiation dans le traitement des articles irrégulièrement produits peut se faire à n'importe quel moment pendant leur traitement, et non pas nécessairement au moment même du démoulage. Cependant le procédé suivant l'invention présente aussi la caractéristique importante de pouvoir être complètement automatisé par l'adoption d'un appareillage approprié, qui est lui-aussi un objet de l'invention.

L'appareillage suivant l'invention est destiné à être annexé à un poste d'introduction de mélange réactif et de fermeture de la coquille supérieure du moule, équipé avec un appareillage de controle des paramètres opératifs, et il est caractérisé en ce qu'il comprend un moyen pour appliquer une trace de colorant à une partie de la cavité interne de la coquille supérieure du moule, ainsi qu'une connexion opérative entre ce moyen pour appliquer une trace de colorant et l'appareillage de contrôle, disposée pour activer le moyen pour appliquer une trace de colorant, après l'introduction du mélange réactif dans la cavité interne de la coquille supérieure du moule et avant la fermeture de la coquille supérieure du moule, chaque fois que l'appareillage de contrôle produit un signal indiquant une irrégularité des paramètres opératifs contrôlés.

Grâce à cet appareillage, l'application de la marque à l'article produit avec des paramètres irréguliers résulte automatiquement de la détection de l'irrégularité des paramètres opératifs. On évite ainsi tout emploi de personnel et toute possibilité d'erreur humaine.

Ledit dispositif pour appliquer une trace de colorant sur une partie de la cavité interne de la coquille supérieure du moule est constitué, de préférence, par un éjecteur disposé pour projeter, vers la cavité interne de la coquille supérieure ouverte du moule, le colorant destiné à former la marque.

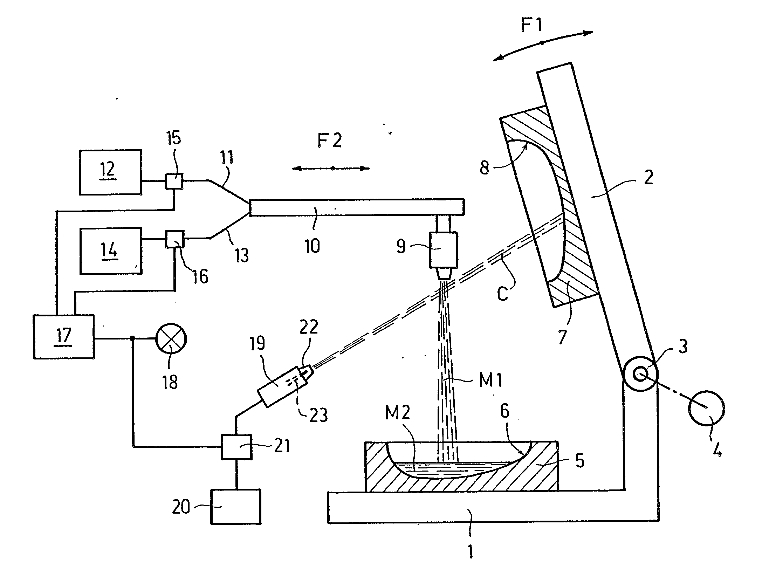

Ces caractéristiques et d'autres et les avantages de l'objet de l'invention ressortiront plus clairement de la suivante description d'un mode de réalisation, donné à titre d'exemple et non limitatif, d'un appareillage suivant l'invention, représenté schématiquement sur le dessin joint, dans lequel la figure unique montre, vu en élévation, un moule en deux parties, ouvert, disposé dans un poste d'introduction du mélange réactif qui est équipé avec un appareillage de contrôle des paramètres opératifs et avec un appareillage pour appliquer une trace de colorant suivant le principe de l'invention.

Sur le dessin, le numéro 1 indique une partie porte-moule fixe, à laquelle est articulée en 3 une partie porte-moule mobile 2, déplacée à l'aide d'un moyen moteur 4 qui est disposé pour soulever et baisser la partie mobile 3 du porte-moule, en la déplaçant suivant la flèche courbe F1. Aux deux parties 1-2 du porte-moule sont appliquées les deux coquilles du moule, respectivement inférieure 5 et supérieure 7 (représentées en coupe), lesquelles présentent des cavités internes 6 et 8 qui dans leur ensemble définissent la forme de l'article à produire, lorque la coquille supérieure 7 est superposée à la coquille inférieure 5. Dans une installation de production, nombre de ces porte-moules 1-2 sont disposés en chaîne et ils sont déplacés en passant dans un poste d'introduction du mélange réactif et ensuite en d'autres postes de traitement.

Le poste d'introduction du mélange réactif comprend une tête mélangeuse et de distribution 9, qui habituellement peut être déplacée à l'aide d'une glissière 10, suivant la flèche F2, entre une position de travail et une position de retrait. Dans la position de travail (qui est celle représentée) la tête 9 se trouve au-dessus de la cavité interne 6 de la coquille inférieure 5 du moule, et elle peut y verser un flux M1 de mélange réactif, qui est recoeuilli en M2 dans la cavité de la coquille 5. Dans la position de retrait (non représentée), la tête 9 autorise la descente de la partie mobile 2 du porte-moule avec la coquille supérieure 7.

La tête mélangeuse et de distribution 9 reçoit les composants destinés à former le mélange réactif par au moins deux conduits 11 et 13 venant de dispositifs de distribution respectifs 12 et 14. Sur les conduits 11 et 13 sont insérés des détecteurs 15 et 16, disposés pour relever et signaler à un appareillage de contrôle 17 les quantités de composants qui, pendant chaque phase de travail, ont été envoyées à la tête mélangeuse et de distribution 9. Dans l'appareillage de contrôle 17, ces informations sont élaborées et comparées aux paramètres corrects introduits et aux tolérances admises, afin de vérifier si la quantité et la composition du mélange réactif M2 introduit dans le moule est telle à donner lieu à un article conforme aux prescriptions. Dans le cas contraire, l'appareillage de contrôle 17 envoie un signal de sortie à un moyen d'avertissement 18.

En application de l'invention, en une position située en face de la coquille supérieure ouverte 7 du moule est installé un éjecteur 19 disposé pour projeter un jet C de colorant vers une partie de la cavité interne 8 de la coquille supérieure 7 du moule. Cet éjecteur reçoit le colorant d'un réservoir 20 et il est contrôlé par un dispositif d'actionnement 21 qui est relié à la sortie du signal d'avertissement de l'appareillage de contrôle 17, de sorte à provoquer l'éjection d'un jet de colorant lorsque et uniquement lorsque l'appareillage de contrôle 17 émet un signal d'avertissement car il a constaté que quelqu'un des paramètres opératifs de la tête mélangeuse et de distribution 9 ne correspond pas, dans les limites de tolérance admises, aux valeurs imposées. Le dispositif avertisseur 18, dans ce cas, peut être conservé ou bien il peut être aussi éliminé.

Le fonctionnement de l'appareillage est le suivant.

Lorsqu'un porte-moule 1-2 est amené au poste d'introduction, il est ouvert comme il apparaît sur le dessin. La tête de distribution 9 se place dans la position de travail représentée et elle commence à débiter le mélange réactif M1 qui est recoeuilli en M2 dans la cavité 6 de la coquille inférieure 5 du moule. A la fin du débit la tête de distribution 9 se retire afin de permettre la fermeture du moule. De son côté, l'appareillage de contrôle 17 élabore les paramètres de la dernière opération de la tête 9 (quantité des différents composants qu'elle a reçu et débité) et les compare aux valeurs préfixées ainsi qu'aux tolérances relatives.

Si les paramètres se montrent acceptables, l'appareillage de contrô le 17 n'intervient pas et tout procède sans application de l'invention. Après une courte période de temps déterminée, habituellement de 2 à 4 secondes, le moteur 4 fait descendre la partie mobile 2 du porte-moule, en superposant la coquille 7 à la coquille 5 et ainsi complétant le moule, puis le porte-moule 1-2 est dirigé vers le poste suivant, tandis que dans la cavité du moule se commence la réaction d'écumage et de réticulation. Après une période de temps suffisant pour la consolidation de l'article formé, le moule 5-7 sera automatiquement rouvert et l'article forme, après extraction, sera dirigé vers les opérations suivantes.

Si, au contraire, les paramètres de l'opération effectuée ne se montrent pas corrects, l'application de l'invention intervient. Dans ce cas l'appareillage de contrôle 17 émet un signal, et celui-ci est reçu par le dispositif d'actionnement 21 qui active l'éjecteur 19 en produisant un court jet de colorant qui est projeté sur une partie de la cavité interne 8 de la coquille supérieure 7 du moule et y se dépose. Cela a lieu dans la courte période de temps entre le retrait de la tête de distribution 9 et la fermeture du moule 5-7. Ainsi, lorsqu'il quitte le poste d'introduction, le moule fermé présente sur une partie supérieure de sa cavité interne une trace de colorant. Lorsque l'article, qui est en train de se former dans le moule par l'action du mélange réactif, s'est expansé jusqu'à atteindre la partie supérieure de la cavité du moule, il entre en contact avec la trace de colorant, qui adhère à l'article. Ainsi, lorsque l'article sera démoulé, il présentera une trace de colorant qui le distinguera comme un article dans la production duquel on a constaté une irrégularité dans les paramètres opératifs. A n'importe quel moment ultérieur cet article pourra être éliminé ou bien soumis à des examens particuliers afin de déterminer s' il peut être utilisé ou non. Si, comme c'est préférable, le colorant utilisé est tel à se transférer complètement sur l'article, aucune trace de celui-ci ne restera sur le moule, qui pourra donc reprendre sans plus le cycle de production, sans nécessiter de nettoyage.

L'éjecteur 19 peut être constitué, par exemple, par un pistolet de pulvérisation dont le gicleur est fermé par une aiguille qui est momentanément retirée lorsque le dispositif d'actionnement 21 commande l'émission d'un jet C de colorant, lequel atteint la cavité 8 de la coquille 7 du moule en passant au-dessus du mélange réactif M2 sans le contaminer. On peut utiliser par exemple un pistolet pour aérographe avec un gicleur de 0,5 à 2 mm, fonctionnant sous une pression comprise entre 3 et 10 bar. Comme colorant on peut utiliser une encre d'un type à séchage rapide et résistante à l'eau, en vente dans le commerce commun; par exemple l'encre art. 8041 vendue par la société Gnocchi S.p.A. de Milan. L'encre peut être éventuellement diluée avec un solvant jusqu'à atteindre une viscosité comprise entre 50 et 500 cps.

On doit entendre toutefois que l'on peut aussi utiliser d'autres genres de colorants, comme les peintures, les laques, les pigments adhésifs en poudre et ainsi de suite, en observant toutefois les conditions qu'ils soient résistants aux conditions de traitement, qu'ils soient physiquement et chimiquement compatibles avec l'article produit, qu'ils adhèrent à celui-ci d'une manière efficace, qu'ils adhèrent provisoirement à la cavité du moule et, de préférence, qu'ils se transfèrent entièrement de la paroi du moule à l'article lorsqu'ils sont atteint par ce dernier dans son expansion. Aussi les moyens d'éjection du colorant peuvent être différents, et ils peuvent soit, de préférence, agir par jet comme dans l'exemple représenté, soit aussi agir en enduisant de colorant la cavité de la coquille supérieure du moule, ou bien en déposant le colorant de toute autre façon.

## Revendications

1 . Procédé pour marquer un article en matière expansée lorsqu'une irrégularité a été constatée au cours de son procédé de production, caractérisé en ce que comme conséquence de la constatation d'une irrégularité dans au moins un des paramètres opératifs après l'introduction du mélange réactif (M2) dans la cavité interne de la coquille inférieure (5) du moule (5-7), et pendant que ce dernier est encore ouvert, à une partie de la cavité interne de la coquille supérieure (7) du moule est appliquée une trace formée par un colorant (C) résistant aux conditions de traitement, physiquement et chimiquement compatible avec l'article formé et capable d'adhérer à celui-ci lorsque, suite à son expansion, il entre en contact avec la partie marquée de la cavité interne de la coquille supérieure (7) du moule.

2 . Procédé suivant la revendication 1, caractérisé en ce que dans sa mise-en-oeuvre on fait usage d'un colorant qui se transfère complètement de la cavité interne de la coquille supérieure (7) du moule à l'article formé.

3 . Procédé suivant la revendication 2, caractérisé en ce que dans sa mise-en-oeuvre on fait usage comme colorant d'une encre à séchage rapide, résistante à l'eau, vendue dans le commerce commun, éventuellement diluée avec un solvant.

4 . Procédé suivant la revendication 3, caractérisé en ce que ladite encre est diluée avec un solvant jusqu'à présenter une viscosité comprise entre 50 et 500 cps.

5 . Procédé suivant la revendication 1, caractérisé en ce que l'application de ladite trace formée par un colorant se fait automatiquement comme conséquence de la constatation d'une irrégularité dans les paramè tres opératifs.

6 . Appareillage pour marquer automatiquement un article en matière expansée lorsqu'une irrégularité a été constatée au cours de son procédé de production, destiné à être annexé à un poste (1-10) d'introduction du mélange réactif (M2) et de fermeture de la coquille supérieure (7) du moule (5-7), équipé d'un appareillage (17) de contrôle des paramètres opératifs, caractérisé en ce qu'il comprend un moyen (19) pour appliquer une trace de colorant (C) à une partie de la cavité interne de la coquille supérieure (7) du moule, et une liason opérative (21) entre ce moyen (19) pour appliquer une trace de colorant et l'appareillage de contrôle (17), laquelle est disposée pour activer le moyen (19) pour appliquer une trace de colorant, après l'introduction du mélange réactif (M2) dans la cavité interne de la coquille inférieure (5) du moule et avant la fermeture de la coquille supérieure (7) du moule, chaque fois que l'appareillage de contrôle (17) émet un signal indiquant une irrégularité des paramètres opératifs contrôlés.

7 . Appareillage suivant la revendication 6, caractérisé en ce que ledit moyen (19) pour appliquer une trace de colorant (C) à une partie de la cavité interne de la coquille supérieure (7) du moule est constitué par un éjecteur disposé pour projeter vers la cavité interne de la coquille supérieure (7) ouverte du moule le colorant (C) destiné à former la marque.

8 . Appareillage suivant la revendication 7, caractérisé en ce qu'en une position située en face de la coquille supérieure (7) ouverte du moule est installé un éjecteur (19), disposé pour projeter un jet de colorant (C) vers une partie de la cavité interne de la coquille supérieure (7) du moule, et contrôlé par un dispositif d'actionnement (21) relié à la sortie du signal d'avertissement de l'appareillage de contrôle (17), de sorte à provoquer l'éjection d'un jet de colorant lorsque et uniquement lorsque l'appareillage de contrôle (17) émet un signal d'avertissement après avoir constaté que quelqu'un des paramètres opératifs de la tête mélangeuse et de distribution (9) ne correspond pas, dans les limites de tolérance admises, aux valeurs imposés.

9 . Appareillage suivant la revendication 8, caractérisé en ce que l'éjecteur (19) est constitué par un pistolet de pulvérisation dont le gicleur est fermé par une aiguille qui est momentanément retirée lorsque le dispositif d'actionnement (21) commande l'émission d'un jet de colorant (C).

10 . Appareillage suivant la revendication 9, caractérisée en ce que ledit pistolet de pulvérisation (19) est un pistolet pour aérographe avec un gicleur de 0,5 à 2 mm, fonctionnant sous une pression comprise entre 3 et 10 bar.